Europäisches Patentamt

European Patent Office

Office européen des brevets

(19)

(11) **EP 1 258 723 A1**

(12) ## EUROPEAN PATENT APPLICATION

(43) Date of publication:
**20.11.2002 Bulletin 2002/47**

(51) Int Cl.7: **G01N 23/20**

(21) Application number: **01830321.4**

(22) Date of filing: **18.05.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventor: **Benedetti, Paolo**<br>**41100 Modena MO (IT)** |
| (71) Applicant: **Imal S.R.L.**<br>**41010 San Damaso, Modena (IT)** | (74) Representative: **Celestino, Marco**<br>**ABM, Agenzia Brevetti & Marchi,**<br>**Viale Giovanni Pisano, 31**<br>**56123 Pisa (IT)** |

(54) **Non destructive process for continuously measuring the density profile of panels**

(57) The process comprises the steps of: collimated transmission of a main radiation (2), in particular an X or γ radiation crossing the material of the panel (5); measuring (6) a scattered radiation (7) scattered under Compton effect by a particle (10) of material that is crossed by the main radiation (2), the measure (6) being carried out by a detector (6) of photons producing a signal responsive to the energy of the radiation (7) scattered by the particle (10). A spectral analysis of the scattered signal is also provided and a selection is made of the signals that are comprised within a predetermined range, discriminating the photons scattered depending upon their energy, and selecting all those comprised within a suitable range of energy with amplitude of predetermined range responsive to the material to analyse. The discriminated photons are counted or measured tracing the density profile by repeating the measure for a discrete succession of particles crossed by the main radiation (2) for all the thickness of the panel (5). The process allows to provide an apparatus easy structurally, which allows a good measuring precision of the density distribution, also at the side edges, as well as measuring the density profile also with the panel (5) in movement.

Fig. 1

EP 1 258 723 A1

## Description

Field of the invention

The present invention relates to the production of composite panels, in species wooden panels, and more precisely it relates to a process for continuously measuring the density profile of such panels.

Furthermore, the present invention relates to a machine for measuring, by means of inspection with radiation, such as in species X or γ radiation, the density profile of a panel of wooden material at the exit a pressa.

For checking the quality of wooden panels, at the end of a production line thereof, a step is normally provided of inspecting the density distribution in the panel sheet. A main object is to check that the density variation along the thickness of the panel is as programmed for the production, and in particular higher density on the surfaces of the panel and lower density in the panel.

For example, it is preferable to have surfaces with very high density for assuring good mechanical characteristics to the panel and low density inside for providing lighter panels and thus saving material.

Description of the prior art

It is well known to determine the average density of a material, responsive to the thickness, by using radiation beams that are absorbed by the material same. The absorption is function of the mass absorption coefficient μ, depending from the type of material. The density is therefore proportional to the attenuation of the radiation, in species photons X or γ, through the material and can be measured directly, provided the thickness is known and the material is homogeneous.

For measuring the density of a material the "Compton scattering technique" is also known, wherein a material, crossed by a collimated beam of photons, is examined measuring the density distribution by analysing the radiation scattered by the material same. This measure can be substantially indifferent with respect to the thickness of the material.

As well known in quantum physics, according to the Compton effect a photon, when interacting with an atom, changes the trajectory and the energy. Under Compton, the difference of energy of the photon before the interaction and of the photon after the interaction is responsive to the direction of the new photon with respect to the direction of the primary photon. As known, the energy is inversely proportional to the wavelength, and the variation of wavelength derives from the known equation of Compton:

$$\lambda' - \lambda = \frac{h}{mc}(1 - \cos\theta) = \frac{2h}{mc}\sin^2\left(\frac{1}{2}\theta\right).$$

where h is the constant of Planck, c is the light speed, m is the mass of the electron and θ is the angle of diffusion. From this equation it is clear that to know the energy of the incident photon is very important for determining the energy of the photon after the interaction with the detected material at a suitable angle 0. However it is not easy to know a priori the energy of the incident photon if it is produced by a radiation source, since an X rays tube emits photons with a very extended spectrum range. In turn, the photon produced under the Compton effect still in the material and before being detected undergoes further interactions through the material same. In particular, it can be attenuated along the chosen direction within a probability range.

A more precise approach has been described in US 4228351 and, in a similar way, in WO95/35491, comparing the radiation attenuated along a main direction and the radiation scattered under Compton effect.

US 4228351 describes a process for measuring the density of light materials, such as for example plastics or composite material mainly comprising Carbon. The process provides the use of a collimated X radiation that crosses the material obliquely. Two sensors are arranged at the other part of the material with respect to the source. A first sensor detects the main radiation that crosses the material along a straight line and, at the same time, a second sensor detects the radiation scattered by the material according to a predetermined direction different from the direction of the main radiation. Calculating the ratio between the radiation that crosses the material and that scattered under Compton effect there is a measure of the density of the material. In particular, in the examples portions of sheet have been examined of Carbon material pressed in a range between 0,21 and 0,86 g/cm$^3$ with thickness set between 1.9 cm and 4,4 cm. The direction of the X main radiation and the direction of detection of the scattered radiation are chosen in the examples at an angle of 45°. The sensors comprise a crystal associated to a photomultiplier tube. The output of the two sensors are preamplified and sent to a respective analyser of pulses, and then the pulses are compared in association with a timer.

In WO95/35491 a similar process is described for measuring the density of light materials, such as for example wood. Also in this case the process provides the use of an X or gamma collimated radiation that hits the material obliquely. Two sensors are arranged at the other part of the material with respect to the source. A first sensor detects the radiation that crosses the material and, at the same time, a second sensor detects the radiation scattered by the material according to a predetermined direction different from the direction of the main radiation. By choosing a suitable direction of the two radiations and comparing the radiation that crosses the material and the scattered one there is a measure of the density of the material in a determined point. The direction of the collimated X radiation and the scattered radiation are chosen in the examples at angles of 55°, or 87° or 119°. By moving the second sensor with respect to the first sensor the density of the material is scanned for all the thickness of the material. Instead of a second sensor movable an array of sensors can be provided that covers all the thickness or that moves for covering all the thickness.

US 5195117 shows a device for measuring the thickness of a material by means of the "Compton scattering technique", wherein the sensor of the scattered radiation is movable for scanning all the thickness of the material. An array of sensors can also be provided.

The presence of two sensors as in US 4228351 and in WO95/35491, one for direct radiation and one for scattered radiation, however, causes a structural complication and requires a system of comparation, thus introducing errors. In fact, it is necessary that the first sensor is aligned to the direct radiation and is at a determined angle with respect to the second sensor for scattered radiation. Furthermore, it is necessary to move the second sensor with respect to the first sensor keeping constant both the angle with respect to the incident radiation and the relative orientation between the second sensor and the first. A not correct comparation causes lower reliability and repeatability of the results.

On the other hand, the existing systems with only one sensor of the scattered radiation, do not allow a sufficient precision.

Summary of the invention

It is an object of the present invention to provide a nondestructive process for continuously measuring the density profile of a panel, capable to encompass the problems existing and that in particular:

- has easy structure;
- allows a good measuring precision of the density distribution;
- allows a good measuring precision at the side edges;
- allows measuring the density profile also with panel in movement.

It is another object of the present invention to provide an apparatus that carries out this method.

According to the invention, a nondestructive process for continuously measuring the density profile of a panel comprises the steps of:

- collimated transmission of a main radiation, in particular an X or γ radiation, through the material of the panel;
- measuring a radiation under Compton effect scattered by a particle of material that is crossed by the main radiation, said measuring being carried out by a detector of photons producing a signal responsive to the energy of the radiation scattered by the particle.

Its characteristic is that the further steps are provided of:

- spectral analysis of the scattered signal and selection of a signal that is comprised within a predetermined range;
- measuring or counting the photons detected after the selection of the spectral analysis in said range;
- tracing the density profile by repeating the measure for a discrete succession of particles crossed by the main radiation for all the thickness of the panel.

The spectral analysis comprises a step of discrimination of the photons versus their energy and detection of all those comprised within a suitable range of energy with a predetermined amplitude as a function of the material to analyse.

The main radiation is incident preferably with an inclination of about 45° with respect the surface of the panel and the scattered radiation is measured at about 90° with respect to the direction of the main radiation.

Advantageously, the step of measuring the scattered radiation is carried out by a photomultiplier with scintillator and with output signal of pulsed type, the scintillator creating a number of photons responsive to the energy of the X radiation scattered by the particle and the photomultiplier creating a voltage pulse depending upon the energy of the photons produced by the scintillator, the succession of the voltage pulses measured then undergoes spectral analysis.

In order to scan the panel for all the thickness, the detector is movable for measuring the scattered radiation along the direction of the main radiation, the density profile being given by the series of pulses recorded for each position of the detector.

Advantageously, the measure of the scattered radiation is carried out by collimation of the radiation on the scintillator, for focusing the measure only on a particle of the material, in order to analyse only the photons produced under Compton effect in the particle.

In order to scan the panel at the edges a correction step is provided by means of an algorithm that considers: the thickness of the beam of the main radiation, the angle of the collimator and the geometry of the panel at the side edges.

Advantageously, the scanning of the panel is carried out with panel in movement during the production process, considering the characteristics of the panel constant during the measure.

According to another aspect of the invention, an apparatus for continuously measuring the density profile of a panel comprises:

- means for collimated transmission of an X main radiation, in particular an X or γ radiation, oriented obliquely with respect to one side of the panel;
- at least one detector of the X radiation scattered under Compton effect by a particle of material, said detector being arranged at a predetermined inclination with respect to the means for transmission,

- means for movement of the at least one detector for scanning the scattered radiation for all the thickness of the panel,

whose characteristic is that the following is further provided:

- means for spectral analysis of the scattered signal and for selection of the signal that is comprised within a predetermined range;
- computing means of the signal depending upon the scattered radiation of the material for calculating the density of the particle.

The means for spectral analysis comprise:

- means for the measure of photons;
- means for discrimination of said photons according to their energy;
- means for counting and measuring only the photons that are comprised within a suitable selected range of predetermined amplitude.

Preferably, the means for transmission are oriented about 45° with respect the surface of the panel and the at least one detector is oriented at about 90° with respect to the direction of the means for transmission.

Advantageously, the detector comprises a photomultiplier with scintillator and with output signal of pulsed type, the scintillator creating a number of photons responsive to the energy of the X radiation scattered by the particle and the photomultiplier creating a voltage pulse depending upon the energy of the photons produced under the scintillator, the succession of the voltage pulses as measured then undergoes spectral analysis.

Said detector can be moved parallel to the direction of the main radiation by a carriage driven by a motor on which the detector is located, the motor moving the carriage according to a predetermined speed function and the pulses transmitted by the detector are responsive to the instant position of the motor.

Advantageously, the detector is associated to a collimator that has the object of focusing the detector only on a particle of the material, for measuring only the photons produced under Compton effect in the particle. This collimator has preferably shape of frustum of pyramid by a high number of metallic blades.

The apparatus is associated to an electronic control unit comprising: the means for spectral analysis, the attenuation computing means, as well as software means of correction for scanning the panel near the side edges.

Brief description of the drawings

Further characteristics and advantages of the process and of the apparatus according to the present invention, will be made clearer with the following description of an embodiment thereof, exemplifying but not limitative, with reference to attached drawings wherein:

- figure 1 shows a diagrammatical view of an apparatus according to the invention for continuously measuring the density profile of panels;
- figure 2 shows a preferred embodiment of an apparatus according to figure 1;
- figure 3 shows a diagrammatical view of the collimation of the radiation scattered by a particle of the material;
- figure 4 shows a block diagram of the software means for spectral analysis and for calculus of the attenuation of the signal, with output of the signal of density;
- figure 5 is a block diagram of the method for analysis of the scattered radiation for computing the density profile;
- figure 6 shows a typical density profile obtained with the device according to the invention;
- figure 7 shows a diagrammatical geometrical view of the correction of the measure at the edges of the material;
- figure 8 is a flow-chart of an algorithm for correction of the measure of density at the side edges.

Description of a preferred embodiment

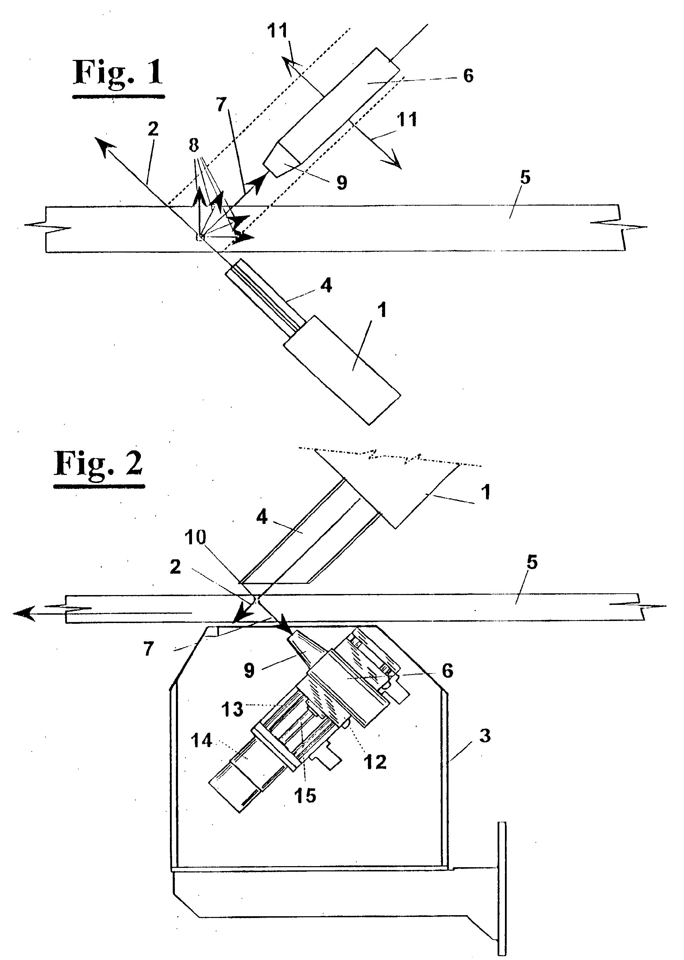

With reference to figure 1, an apparatus for measuring the density profile of a panel of wooden material at the exit from a press provides a tubular radiation source 1 that emits a main beam 2 through a collimator 4. The X rays tube 1 is located at a side of a panel 5 that can be the low side, shown in figure 1, or the top side shown in figure 2, preferably at 45° from the horizontal plane of the panel same. At the opposite side a detector 6 of X rays is provided.

According to the above, the beam 2 of the radiation source collides with the panel 5 and crosses its material with photon-material interaction, comprising the interaction according to the Compton effect. This interaction modifies the main beam 2 but does not change macroscopically the panel; therefore this analysis is to be considered as a nondestructive analisys.

According to the invention a beam 7 is considered generated under Compton effect at an adjustable angle, preferably 90° with respect to the direction of the main beam 2. The detector 6 can move parallel to the direction of the main beam 2, as shown by arrows 11 of figure 1, in order to scan the material 5 for all the thickness and to trace a curve proportional to the density profile.

Panel 5 is movable in longitudinal direction, as indicated by the arrow, and is located at the exit of a production plant. The fact that the panel is moving allows to obtain in turn a measure of density on particles of different material but of density substantially constant at the same depth in the material. The profile of interest is in fact that detected for all the depth of the material and for portions successive to one another of the panel, and is substantially equal to the profile detected for the panel still. In fact, only by changing the production parameters of the panel the profile changes. Therefore, the fact that the panel 5 is in movement will hereinafter not be considered any more.

As shown in figure 2, the mechanical part on which the detector 6 is present is mounted on a base frame 3 and consists in a carriage 12 driven on a guide 13 by a motor 14 by means of a screw 15. On carriage 12 the detector 6 is arranged with a collimator 9. Every time that a density profile has to be measured in this way, motor 14 moves for the whole stroke of carriage 12.

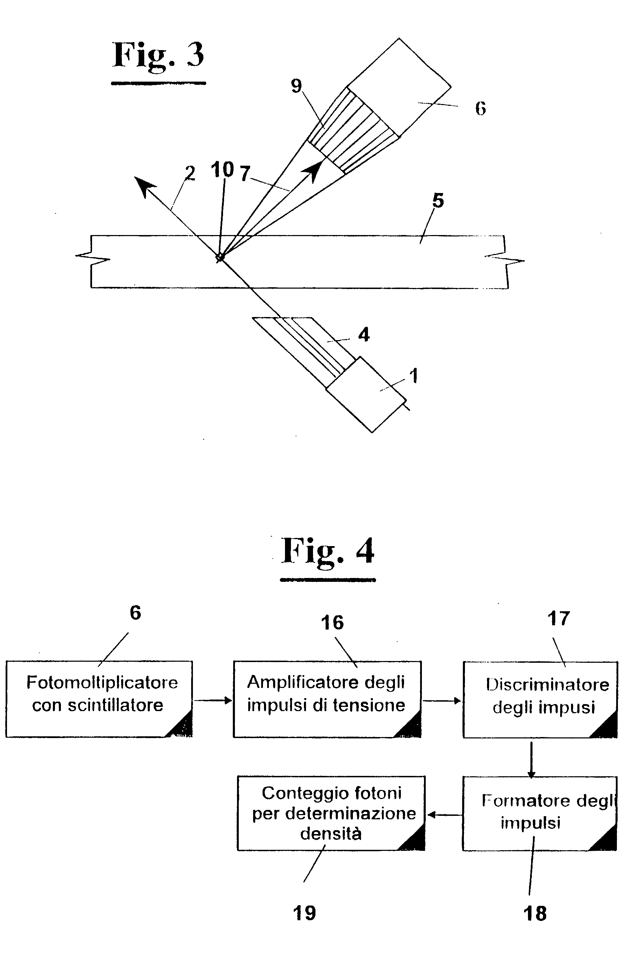

Since the Compton effect produces different photons in all the directions, indicated symbolically with the radially arranged arrows 8 of figure 1, in order to consider only the beam 7 the collimator 9 is provided, shown also in figure 3, which has the object of focusing on the detector 6 only the photons produced under Compton effect in the infinitesimal volume 10 of panel whose density has to be inspected. This collimator 9 has the shape of frustum of pyramid and has steel blades of appropriate thickness, in high number in order to be certain to eliminate during the detection step all the photons not desired.

The detector 6 used is a photomultiplier with scintillator with output signal of pulsed type. This configuration has been preferred because a pulsed signal can be obtained for each photon received by the detector. The output pulse has a voltage amplitude depending upon the energy of the photon. In fact the scintillator produces a number of light photons responsive to the energy of the X photon; these light photons are captured by the photocathode of the photomultiplier of the detector 6, converted into electrons and, with an avalanche effect between the stages that are polarised with a high voltage, a voltage pulse is produced. This voltage pulse is therefore depending upon the energy of the X photon detected.

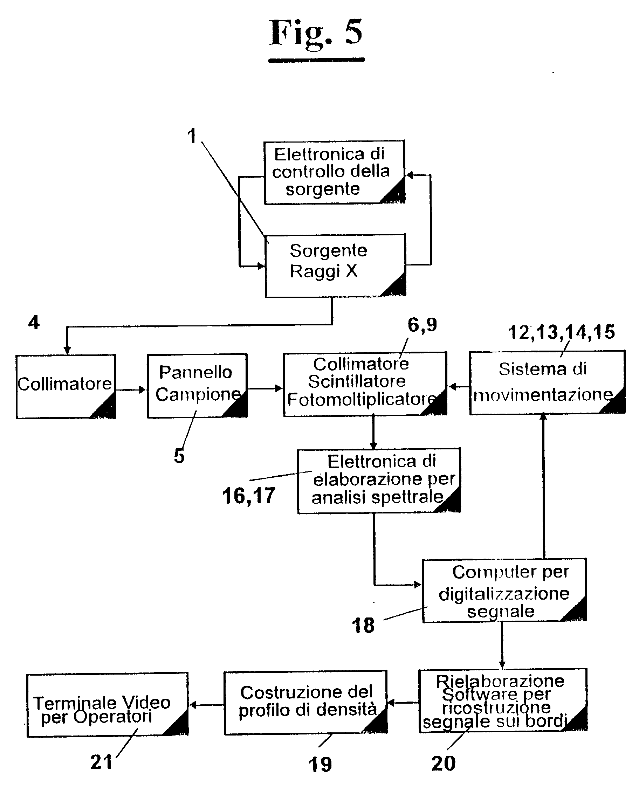

With reference to the block diagram of figure 4, and to that of figure 5, where the whole apparatus is diagrammatically shown, an amplification of the pulsed signal is then done in 16 and then a spectral analysis 17 of the signal received by the detector 6 is effected, selecting only the photons with energy within a particular range. This selection is made by a comparator of pulses 18 that chooses only those with a particular peak value. This way, only the photons with a single energy are treated so that, after the interaction under Compton effect, the photons detected have immediately statistically a same attenuation owing to the mass absorption coefficient. The other signals are automatically excluded from the analysis. The signal in voltage proportional to the energy of the photons thus formed is then shaped as a series of pulses that can be counted at 19. The number of pulses counted corresponds to the number of photons detected, which are directly responsive to the density of the material of the particle 10 examined.

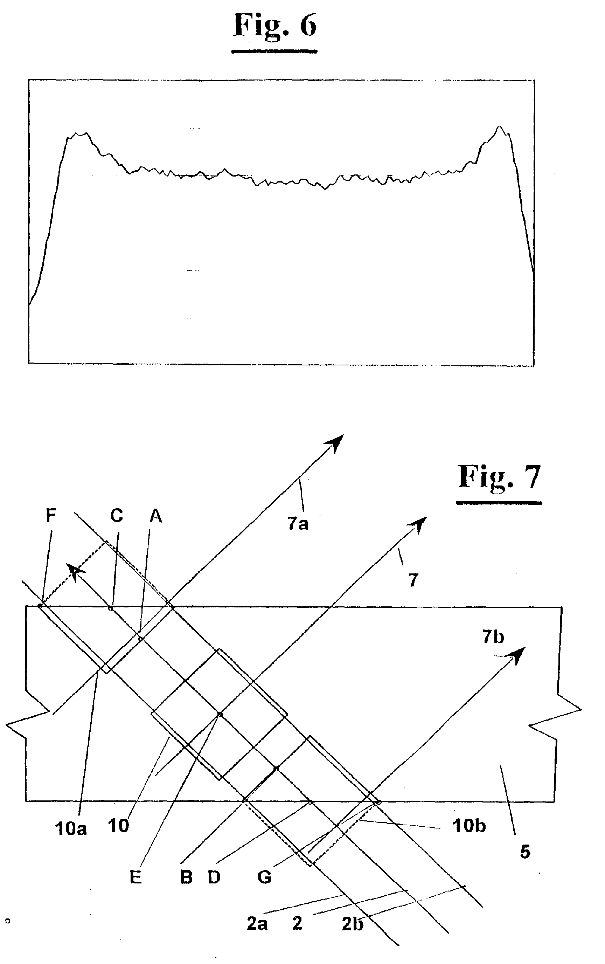

The pulses are of the same value of amplitude in voltage, about several Volts, whereas the number of pulses is directly proportional to the density of the panel. By a converter 18 these pulses are transformed into a digital signal. There is in conclusion a table of values read from the detector for each step of the motor. A system of correction 20 hereinafter described calculates from the read values the density at the side edges. All these points if are displayed graphically in 21 give the density profile, indicated for example in figure 6.

It must be noted that without any correction, by analysing the signal for the whole thickness, the result is that the generated profile corresponds to that calculated of the panel only in the central part, whereas it is very different at the edges of the panel. This aspect of not coincidence can be overcome with geometrical considerations. With reference to figure 7, in fact, the collimator 9 is made for measuring a thin beam 7, in particular a radiation beam of infinitesimal width. However, even if the collimation is precise, the beam 7 has a width not negligible with respect to the infinitesimal size of the photons detected. Therefore, the real thickness of the incident beam 2 must be considered. In figure 7, where the size of beam 2 have been exaggerated, it is shown that the detector 6 does not detect only the infinitesimal volume around the examined point, but more volume 10 depending upon the thickness of the beam 2 and upon the angle of the collimator 4. The differences examined are not very relevant in the central part of the panel, between points A and B, since the volume 10 even if larger is however always fixed, but when approaching the edges the volume examined decreases linearly up to reaching at the edges C and D triangular shapes 10c and 10d. The consequence of this is that the signal 7c and 7d received by the detector corresponds to an attenuation near the edges that provides a not real density profile.

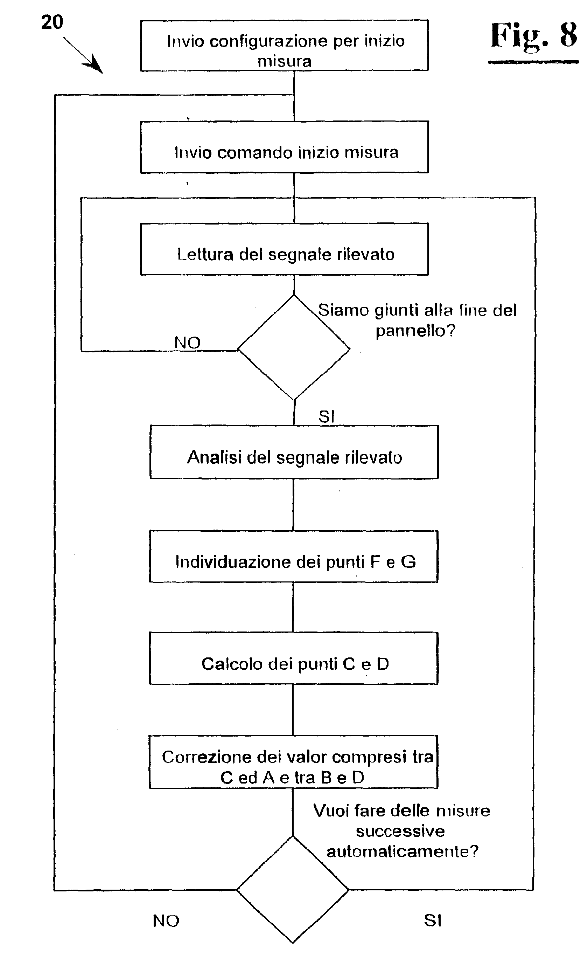

To correct the error at the edges an algorithm is used, computed by block 20 of figure 5 and indicated in more detailed way in figure 8. Block 20 recognizes the curve of the detected profile and carries out the correction at the edges considering some parameters that depend upon the dimensions of the beam and the collimator, easily determined by a man of the art. The algorithm has the object of determining automatically the point where the panel starts and the point where the signal coming from the panel ends. The algorithm of figure 7 outlines the real density profile along line "2". The beam, however, has a real size defined by lines "2a" and "2b". The profile that has to be outlined must then go from point C to point D. Detector 6 starts measuring a signal different from zero from point F up to point G. Actually the signal rises linearly from F to A, follows the real trend of the density profile between points A and B, and undergoes a decrease from B to G. Then, task of the algorithm is to determine the above points (A, B, C, D, F, G) and to make a correction of linear type starting from point C up to point A for compensating the lack of signal, and the same is made for points between B and D.

Notwithstanding reference has been made to the use of only detector 7, obviously, according to the principles of the invention, also other detector can be provided on different sides of the panel at different angles.

Furthermore, notwithstanding the counting step of the pulses as elaborated after the spectral analysis is made on the basis of voltage signals directly transformed into digital signals and discriminated according to their shape, this does not exclude that the voltage signals are determined as analog signals, filtered and then converted into digital signals.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

**Claims**

1. A nondestructive process for continuously measuring the density profile of a panel (5), comprising the steps of:

   - collimated transmission of a main radiation (2), in particular X or gamma, crossing the material of said panel (5);
   - measuring (6) the radiation (7) under Compton effect scattered by a particle (10) of material that is crossed by said main radiation (2), said measuring step being carried out by at least one detector (6) producing a signal responsive to the energy of said radiation (7) scattered by said particle (10),

   **characterised in that** the further steps are provided of:

   - spectral analysis (16,17) of the signal and selection of the signal that is comprised within a predetermined range;
   - measuring or counting (18,19) the detected photons as selected by spectral analysis within said range;
   - tracing said density profile by repeating said measure for a discrete succession of particles crossed by said X or gamma main radiation (2) for all the thickness of said panel (5).

2. Method according to claim 1, wherein said step of spectral analysis comprises a step of discrimination of the photons responsive to their energy and detection of all those that are comprised within a suitable range of energy with amplitude of predetermined range depending upon the material to analyse.

3. Method according to claim 1, wherein said main radiation (2) is incident to said panel (5) obliquely at about 45° with respect the surface of the panel (5) and said measuring (6) is effected at a direction about 90° with respect to the direction of said main radiation (2).

4. Method according to claim 1, wherein said step of measuring the scattered radiation (7) is carried out by a detector for X rays with gives an output signal of pulsed type, said detector creating a voltage pulse depending upon the energy of the photons, the succession of the voltage pulses measured being then subjected to said spectral analysis.

5. Method according to claim 1, wherein said detector (6), for scanning the panel (5) for all the thickness, is movable (12,13,14,15) along the direction of the main radiation (2) according to a predetermined speed function, said density profile being given by the series of pulses recorded for each step converted into a digital signal.

6. Method according to claim 1, wherein said measuring (6) of the scattered radiation (7) is carried out by collimating (9) said radiation on said detector, for focusing the measure only on a particle (10) of said material, in order to analyse only the photons produced under Compton effect in said particle (10).

7. Method according to claim 1, wherein, for scanning the panel (5) at the edges a correction step is provided by means of an algorithm that considers: the thickness of the beam of said main radiation (2), the angle of collimation (9) and the geometry of the panel (5) at the side edges.

8. Method according to claim 1, wherein the scanning step of said panel (5) is carried out with said panel in movement during the production process, considering the characteristics of the panel constant during the measure

9. An apparatus for continuously measuring the density profile of a panel (5) comprising:

   - means for collimated transmission (1,4) of a main radiation (2), in particular X or gamma, oriented obliquely with respect to one side of said panel (5);
   - at least one detector (6) of the radiation (7) scattered under Compton effect by a particle (10) of said material, said detector being arranged at a predetermined inclination with respect to said means for transmission,
   - means for movement (12-15) of said at least one detector (6) for scanning said scattered radiation (7) for all the thickness of said panel (5),

   **characterised in that** there are furthermore:

   - means for spectral analysis of said signal and for selection of a signal that is comprised within a predetermined range;
   - means for measuring and calculating the photons detected in said range for computing the density of said particle (10).

10. Apparatus according to claim 9, wherein said means for spectral analysis comprise:

   - means for measuring (6) the photons;
   - means for discriminating said photons according to their energy;
   - means for counting and measuring only the photons that are comprised within a suitable selected range of predetermined amplitude.

11. Apparatus according to claim 9, wherein said means for transmission are oriented about 45° with respect the surface of the panel (5) and said at least one detector (6) is oriented at about 90° with respect to the direction of said means for transmission.

12. Apparatus according to claim 9, wherein said detector (6) comprises a photomultiplier with scintillator and with output signal of pulsed type, said scintillator creating a number of photons responsive to the energy of the X scattered radiation (7) from said particle (10) and said photomultiplier creating a voltage pulse depending upon the energy of the photon produced under said scintillator, the succession of the voltage pulses measured being then subject to spectral analysis.

13. Apparatus according to claim 9, wherein said detector (6) is moving along the direction of the main radiation (2) by a carriage (12) driven by a motor (14) on which the detector is located (6), wherein said motor moves said carriage (12) according to a predetermined speed function and the pulses transmitted by said detector (6) are associated to the instant position of said motor (14).

14. Apparatus according to claim 9, wherein said detector (6) is associated to at least one collimator that focuses the detector (6) only on one particle (10) of said material, for measuring only the photons produced under Compton effect in said particle (10)

15. Apparatus according to claim 9, wherein a electronic control unit is provided, comprising said means for spectral analysis, said attenuation computing means, as well as software correction means for scanning the panel (5) near the side edges.

**Fig. 1**

**Fig. 2**

# Fig. 3

# Fig. 4

| Fotomoltiplicatore con scintillatore | → | Amplificatore degli impulsi di tensione | → | Discriminatore degli impusi |
|---|---|---|---|---|

| Conteggio fotoni per determinazione densità | ← | Formatore degli impulsi |
|---|---|---|

6     16     17

19     18

# Fig. 5

```
                    ┌──────────────────┐
              1     │  Elettronica di  │
                    │ controllo della  │◄──┐
                    │     sorgente     │   │
                    └──────────────────┘   │
                    ┌──────────────────┐   │
                    │     Sorgente     │───┘
                    │     Raggi X      │
                    └──────────────────┘
```

**4**

**6,9**

**12,13,14,15**

```
┌─────────────┐   ┌───────────┐   ┌──────────────────┐   ┌──────────────┐
│ Collimatore │──►│  Pannello │──►│    Collimatore   │◄──│  Sistema di  │
│             │   │ Campione  │   │    Scintillatore │   │ movimentazione│
└─────────────┘   └───────────┘   │  Fotomoltiplicatore│  └──────────────┘
                                  └──────────────────┘
```

**5**

**16,17**

```
                    ┌──────────────────┐
                    │   Elettronica di │
                    │ elaborazione per │
                    │  analisi spettrale│
                    └──────────────────┘
```

```
                              ┌──────────────────┐
                              │   Computer per   │
                              │  digitalizzazione│
                              │     segnale      │
                              └──────────────────┘
```

**18**

```
┌──────────────────┐   ┌──────────────────┐   ┌──────────────────┐
│ Terminale Video  │◄──│  Costruzione del │◄──│  Rielaborazione  │
│  per Operatori   │   │ profilo di densità│   │  Software per    │
└──────────────────┘   └──────────────────┘   │  ricostruzione   │
                                              │ segnale sui bordi│
                                              └──────────────────┘
```

**21**

**19**

**20**

# Fig. 6

# Fig. 7

**20**

**Fig. 8**

Invio configurazione per inizio misura

Invio comando inizio misura

Lettura del segnale rilevato

Siamo giunti alla fine del pannello?

NO

SI

Analisi del segnale rilevato

Individuazione dei punti F e G

Calcolo dei punti C e D

Correzione dei valor compresi tra C ed A e tra B e D

Vuoi fare delle misure successive automaticamente?

NO

SI

**European Patent Office**

## EUROPEAN SEARCH REPORT

Application Number

EP 01 83 0321

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2 997 586 A (SCHERBATSKOY SERGE A) 22 August 1961 (1961-08-22) * column 2; figures 1,2 * | 1-6, 8-12,14 | G01N23/20 |
| D,A | US 5 195 117 A (ONG POEN S) 16 March 1993 (1993-03-16) * abstract * | 1 | |
| D,A | US 5 970 116 A (DUEHOLM STEN ET AL) 19 October 1999 (1999-10-19) * abstract * | 1 | |
| D,A | US 4 228 351 A (SNOW SAMUEL G ET AL) 14 October 1980 (1980-10-14) * abstract * | 1 | |
|  |  |  | **TECHNICAL FIELDS SEARCHED (Int.Cl.7)** |
|  |  |  | G01N |

The present search report has been drawn up for all claims

| Place of search | Date of completion of the search | Examiner |
|---|---|---|
| THE HAGUE | 15 March 2002 | Hulne, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 258 723 A1**

## ANNEX TO THE EUROPEAN SEARCH REPORT
## ON EUROPEAN PATENT APPLICATION NO.

EP 01 83 0321

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2002

| Patent document cited in search report | | Publication date | Patent family member(s) | | Publication date |
|---|---|---|---|---|---|
| US 2997586 | A | 22-08-1961 | NONE | | |
| US 5195117 | A | 16-03-1993 | WO | 9322661 A1 | 11-11-1993 |
| US 5970116 | A | 19-10-1999 | DK | 72394 A | 21-12-1995 |
| | | | AT | 202846 T | 15-07-2001 |
| | | | AU | 2732995 A | 15-01-1996 |
| | | | CA | 2192340 A1 | 28-12-1995 |
| | | | DE | 69521613 D1 | 09-08-2001 |
| | | | DE | 69521613 T2 | 31-10-2001 |
| | | | WO | 9535491 A1 | 28-12-1995 |
| | | | EP | 0766814 A1 | 09-04-1997 |
| | | | ES | 2159642 T3 | 16-10-2001 |
| | | | PT | 766814 T | 28-12-2001 |
| US 4228351 | A | 14-10-1980 | NONE | | |